# EUROPEAN PATENT APPLICATION

(11) **EP 3 273 045 A1**
(43) Date of publication of application: **24.01.2018**
(21) Application number: 17167729.7
(22) Date of filing: 24.04.2017
(51) Int. Cl.: F02K 3/115, F02C 7/18

(54) **HEAT SINK OF A TURBOMACHINE**

(30) Priority: 16.05.2016 GB 201608523
(71) Applicant: Rolls-Royce plc, London SW1E 6AT (GB)
(72) Inventor: HUSSAIN, Zahid, Derby, Derbyshire DE24 8BJ (GB); SHEAF, Christopher, Derby, Derbyshire DE24 8BJ (GB); WILSON, Mark, Derby, Derbyshire DE24 8BJ (GB); MACMANUS, David, Derby, Derbyshire DE24 8BJ (GB)
(74) Representative: Rolls-Royce plc

(57) **Abstract**

There is disclosed a heat sink for location in a fluid flow, comprising a heat sink base and a plurality of heat dissipating elements, such as elongate fins, extending from the surface of the heat sink base. In certain arrangements the heat sink is provided with a diversion flow passageway for diverting a fraction of fluid flow away from the heat dissipating elements. In other arrangements there may be two arrays of elongate fins laterally offset. In yet a further arrangement the heat sink may be configured to promote the generation of at least one vortex.

## Description

The disclosure relates to a heat sink. In particular, although not exclusively, the disclosure relates to a heat sink for a gas turbine engine.

Gas turbine engines typically comprise a cooling system for maintaining the temperature of the gas turbine engine within safe operational limits, despite the gas turbine engine generating significant amounts of heat.

Passive heat sinks (sometimes referred to as surface coolers) and matrix heat exchangers are two known types of apparatus that can be used to cool components. A passive heat sink typically comprises a base plate from which planar or ribbed fins extend. The base plate is attached to a component of the engine to be cooled and a cooling fluid flow, such as air, flows through the fins, causing heat to be dissipated from the component. A matrix cooler typically comprises a plurality of tubes with thermally conductive fins connected to the tubes. A coolant is driven through the tubes to dissipate heat from the region surrounding or in contact with the fins.

Matrix coolers tend to be more efficient than passive heat exchangers. However, they can be more complex, heavier, and more expensive. Whilst passive heat exchangers are typically relatively inexpensive and of a simple construction, in order to provide the desired amount of cooling they tend to be quite large.

It is therefore desirable to provide a heat exchanger having an improved efficiency.

According to an aspect there is provided a heat sink for location in a fluid flow, comprising: a heat sink base; a plurality of heat dissipating elements extending from the surface of the heat sink base and defining a main flow path which passes through the plurality of heat dissipating elements; and a diversion passageway having an inlet upstream of at least some of the heat dissipating elements and defining a diversion flow path. In use, a fraction of the fluid flow approaching the plurality of heat dissipating elements is diverted away from heat dissipating elements by entering the inlet and flowing through the diversion passageway. Fluid, such as air, flowing along the main flow path acts to cool the heat sink, thus cooling the component to which it is thermally coupled. The component could be a hot component of a gas turbine engine, such as a fan casing. The fraction of fluid flow that is diverted through the diversion passageway is relatively slow-moving. By diverting this fraction of slow-moving fluid the velocity of the fluid flow along the main flow path close to the surface of the heat dissipating elements is increased. This increases the rate of heat transfer from the heat sink, in particular the heat dissipating fins, and improves the thermal efficiency of the heat sink.

The heat dissipating elements may be spaced so as to form fluid channels therebetween. The heat dissipating elements may be elongate fins. The elongate fins may be arranged to be substantially aligned with the general direction of the fluid flow. The diversion passageway may be at least partly defined by the base. The inlet may be defined by the base. The diversion passageway may comprise an outlet defined by the base. The outlet may be downstream of at least some of the heat dissipating elements. The heat sink may further comprise a valve for regulating the fluid flow through the diversion passageway. In use, the valve may be operated so as to increase the rate of heat transfer from the heat sink, or reduce the level of parasitic losses within the system. The heat dissipating elements may extend from a supporting portion of the base, with the diverting passageway located below the supporting portion. The supporting portion of the base may have an aerofoil-shaped cross section.

According to another aspect there is provided a heat sink for location in a fluid flow, comprising: a first fin array comprising a plurality of first elongate fins arranged side-by-side and spaced apart so as to define first flow channels; and a second fin array located downstream of the first fin array and comprising a plurality of second elongate fins arranged side-by-side and spaced apart so as to define second flow channels; wherein the first and second fins are substantially parallel to one another, and wherein the first and second fin arrays are laterally offset from one another such that the second fins are aligned within the flow channels defined by the first fins. As the fluid flow passes along the first fluid channels, boundary layers are generated on the surface of the first fins. These boundary layers increase in thickness in a downstream direction. When the fluid flow reaches the end of the first fluid channels, a new boundary layer is re-generated on the surfaces of the second fins. At an upstream portion of the second fin array, the boundary layers formed on the second fins are thinner than the boundary layers formed on downstream portions of the first fins. Accordingly, the rate of heat transfer from the second fins, and thus the heat sink as a whole, is improved.

The first and second fins may be arranged to be substantially aligned with the general direction of the fluid flow. The second fins may be aligned centrally within the first flow channels. The downstream ends of at least some of the fins may be shaped to generate turbulent flow. This turbulent flow mixes the boundary layers in the second fluid channels. This leads to a reduction in thickness of the boundary layers, an increase in fluid velocity adjacent to the second fins, and an improvement in the rate of heat transfer from the second fins and the heat sink as a whole. A single second fin may be aligned within each first flow channel. There may be a plurality of first fin arrays and/or a plurality of second fin arrays. The first and second fin arrays may be alternately arranged in the flow direction.

According to yet another aspect there is provided a heat sink for location in a fluid flow, comprising: a heat sink base; and a plurality of heat dissipating elongate fins arranged side-by-side and spaced apart so as to define a plurality of flow channels; wherein one of more of the flow channels is provided with a vortex-generating feature towards an upstream end which is arranged such that in use it promotes the generation of a vortex within the respective flow channel, the vortex having a vortex axis that longitudinally extends within the respective flow channel. The vortex stabilises flow within the fluid channel such that the density of air in a downstream portion of the fluid channel is maintained, thereby improving the heat transfer efficiency of downstream portions of the heat dissipating fins. The vortex introduces volumes of cool air into the fluid channel and rejects volumes of hot air from the fluid channel, thereby further improving the rate of heat transfer. Additionally, the vortex acts to mix boundary layers formed along the heat dissipating fins and heat sink base, reducing their thickness and improving the rate of heat transfer.

The or each vortex-generating feature may comprise a shaped projection. The shaped projection or projections may extend from the heat sink base. The or each vortex-generating feature may comprise a pair of shaped projections extending from the heat sink base and located side-by-side. The pair of shaped projections may be substantially symmetrical. The or each vortex-generating feature may comprise a fluid jet nozzle. The or each vortex-generating feature may be arranged to generate a pair of contra-rotating vortices. The pair of contra-rotating vortices form a geared-pair that help to sustain each other along the length of the fluid channels.

According to yet another aspect there is provided a heat sink for location in a fluid flow, comprising: a heat sink base; and a plurality of heat dissipating elongate fins arranged side-by-side and spaced apart so as to define a plurality of flow channels; wherein at least some of the fins have a twisted upper edge region that is twisted along its length such that in use it promotes the generation of a vortex within at least one flow channel, the vortex having a vortex axis that longitudinally extends within the respective flow channel. The vortex stabilises airflow such that the heat-dissipating capability of downstream portions of the heat sink are maintained. The fluid flow is further prevented from travelling away from the heat dissipating fins and the base by the heat dissipating fins themselves.. Additionally, the twisted upper increases the physical distance and length of time that the fluid flow is exposed to the heat dissipating fins, improving the rate of heat transfer therefrom.

Each elongate fin may have a twisted upper edge region. At least some of the fins may have a twisted upper edge region. At least some of the fins may have a planar region that extends from the heat sink base. The twisted upper edge region may have a first twist portion and a second twist portion. The first and second twist portions may be twisted to opposite sides of the general longitudinal axis of the fin. The twisted upper edge region may have an inflexion point. The inflexion point may be aligned with the general longitudinal axis of the fin. The inflexion point may be located between the upstream and downstream end of the fin. The inflexion point may be located at the longitudinal mid-point of the fin. The twisted upper edge may be substantially helicoidal in shape. The pitch of the helicoidal twisted upper edge may be greater than the length of the twisted upper edge. The elongate fins may be arranged in pairs. Each pair may comprise a first elongate fin and a second elongate fin smaller than the first elongate fin. The first elongate fin and the second elongate fin may each have a twisted upper edge region.

The heat sink may form part of a gas turbine engine. The heat sink may be disposed in a fluid flow path and be thermally coupled to a component to be cooled.

Arrangements will now be described, by way of example, with reference to the accompanying drawings, in which:
Figure 1 schematically shows a cross-sectional side view of a gas turbine engine having a heat sink attached to the fan casing;
Figure 2 schematically shows a perspective view of a heat sink in accordance with a first arrangement;
Figure 3 schematically shows a cross-sectional side view of the heat sink of Figure 2;
Figure 4 schematically shows a cross-sectional side view of a heat sink in accordance with a second arrangement;
Figure 5 schematically shows a perspective view of a heat sink according to a third arrangement;
Figure 6 schematically shows a plan view of the heat sink of Figure 5;
Figure 7 schematically shows a perspective view of a heat sink according to a fourth arrangement;
Figure 8 schematically shows an end view of the heat sink of Figure 7;
Figure 9 schematically shows a perspective view of a heat sink according to a fifth arrangement;
Figure 10 schematically shows a perspective view of a heat sink according to a sixth arrangement; and
Figure 11 schematically shows a perspective view of a heat sink according to a seventh arrangement.

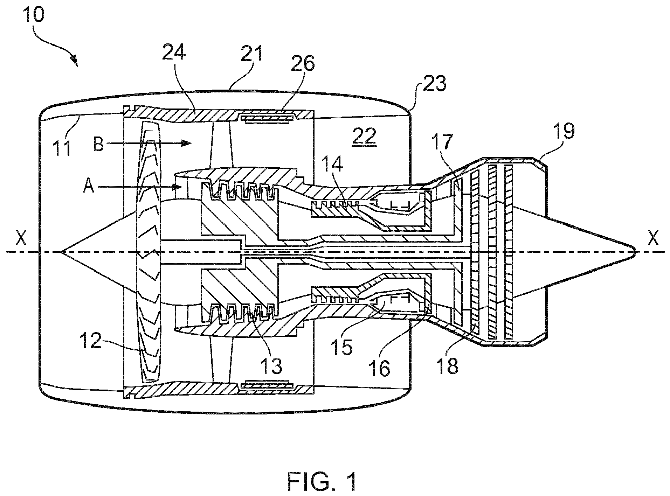

Figure 1 shows a ducted fan gas turbine engine 10 having a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11 and a bypass exhaust nozzle 23. A fan casing 24 is supported by the nacelle 21, and defines a bypass duct 22.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

As shown in Figure 1, a number of passive heat sinks 26 (sometimes known as surface coolers or heat exchangers) are thermally coupled to the inner surface of the fan casing 24 and are circumferentially spaced. The heat sinks 26 are thus disposed in the bypass duct 22 and are consequently arranged in a fluid flow (i.e. the fluid flow through the bypass duct 22). The heat sinks 26 may all be of substantially the same construction, or they may be of different constructions. Further, a single annular heat sink 26 could be used. The heat sinks 26 could be of any suitable construction, and a number of different arrangements will be described in detail below.

In use, the temperature of the fan casing 24 increases. The second air flow B, which is significantly cooler than the temperature of the fan casing 24, flows over the passive heat sinks 26. The second cooler air flow B thus acts to dissipate heat from the heat sinks 26, thereby cooling the fan casing 24. This maintains the temperature of the fan casing 24 of the gas turbine engine 10 within safe and acceptable limits. As will be described in detail below, the heat sinks 26 are configured to improve the efficiency with which they dissipate thermal energy, when compared to standard fin and plate heat sinks.

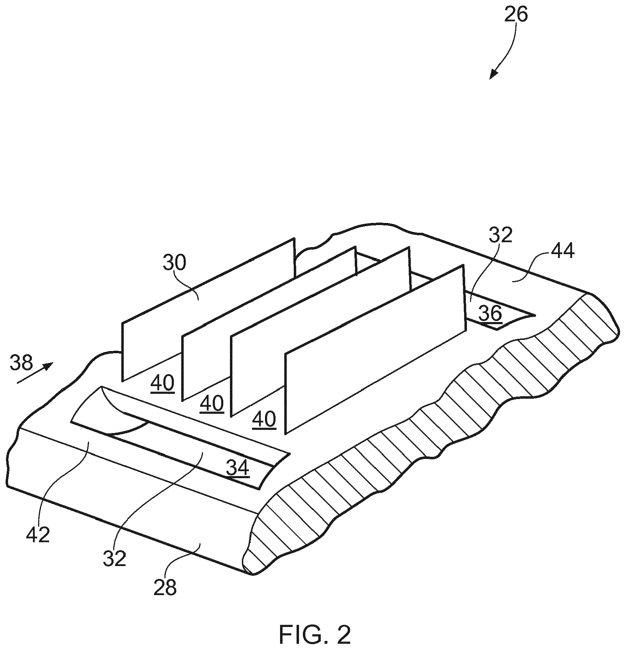

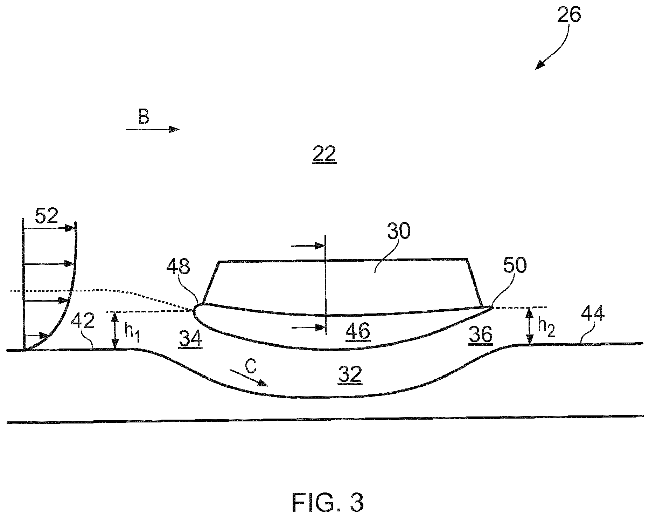

**Figures 2** **and** **3** show a first arrangement of a passive heat sink 26. The heat sink 26 comprises a thermally conductive base member 28, a plurality of thermally conductive heat dissipating elements in the form of elongate fins 30, and a diversion passageway 32.

The heat sink 26 is generally elongate and has a longitudinal axis that is arranged to be generally aligned with the direction of fluid flow. The base member 28 comprises an upstream end 42 and a downstream end 44 with a fin-retaining portion 46 located therebetween. In this arrangement a plurality of elongate planar heat dissipating fins 30 extend from the upper surface of the fin-retaining portion 46 in a direction substantially perpendicular to the upper surface. The fins 30 are parallel to one another and to the longitudinal axis of the heat sink 26. The fins 30 are arranged side-by-side and define a plurality of flow channels 40 therebetween. Although only four fins 30 are shown in Figure 2, it should be appreciated that there could be many more. Further, as opposed to elongate fins, the heat dissipating elements could be other forms of projections.

The diversion passageway 32 is formed within the base member 28 and comprises an inlet 34 and an outlet 36. The inlet 34 and outlet 36 are formed in the upper surface of the base member 28 with the inlet 34 disposed upstream of the fins 30 and the outlet 36 disposed downstream of the fins 30. In this arrangement, the inlet and outlets 34, 36 are wider than the width of the array of fins 30 (i.e. the lateral spacing between the outermost fins). As shown best in Figure 3, the diversion passageway 32 extends underneath the fin retaining portion 46 and the array of fins 30.

The diversion passageway 32 is aerodynamically profiled to minimise aerodynamic drag and the cross-sectional profile of the fin retaining portion 46 (in a plane perpendicular to the width dimension of the heat sink) is aerofoil-shaped. The fin-retaining portion 46 thus has an upstream leading edge 48 and a downstream trailing edge 50. The leading edge 48 forms the upstream edge of the inlet 34 and the trailing edge 50 forms the downstream edge of the outlet 36. As shown in Figure 3, the leading edge 48 is offset from the upstream portion 42 of the base 28 in a direction substantially perpendicular to the upper surface of the base member 28 such that the leading edge 48 sits above the upper surface of the upstream portion 42 by a height h₁. Similarly, the trailing edge 50 is offset from the downstream portion 44 of the base 28 in a direction substantially perpendicular to the upper surface of the base member 28 such that the trailing edge 50 sits above the upper surface of the downstream portion 44 by a height h₂. The inlet 34 therefore lies in a plane that is inclined to the longitudinal axis of the heat sink 26, and the outlet 36 also lies in a plane that is inclined to the longitudinal axis of the heat sink 26. In use, this arrangement encourages fluid to enter the inlet 34 and flow through the diversion passageway 32.

As explained above, in use, the flow of air B within the bypass duct 22 flows through the heat sink 26 and acts cool the heat sink 26 (i.e. it coveys heat away from the heat sink), thus cooling the fan casing 24. The rate of heat transfer into the air flow B is related to the flow velocity through the heat sink 26. Specifically, the higher the flow velocity across the conducting surfaces of the heat sink 26 (i.e. the surfaces of the base member 28 and the fins 30), the higher the heat transfer.

Referring to Figure 3, near to the surface of the upstream portion 42 of the base 28, the effects of fluid viscosity are significant and therefore a boundary layer is formed. This results in a reduced flow velocity across the surface of the upstream portion 42 of the base member 28 compared to the flow velocity of the fluid flow B in the remainder of the bypass duct 22. This is shown by velocity profile 52. As the fluid flow approaches the inlet 34 a fraction of the fluid flow, specifically the slow fluid flow of the boundary layer, enters the diversion passageway 32 and flows through the passageway 32, exiting through the outlet 36. This means that the remaining main fluid flow that flows through the flow channels 40 formed by the fins 30 has a higher flow velocity as the boundary layer has been effectively "tapped" through the diversion passageway 32. Higher momentum fluid therefore acts as the heat transfer medium. The higher flow velocity across the fins 30 and the fin-retaining portion 46 increases the rate of heat transfer into the fluid flow, and therefore improves the efficiency of the heat sink 26. This allows the heat sink 26 to be reduced in size (when compared with a conventional finned heat sink), resulting in a reduced weight and cost.

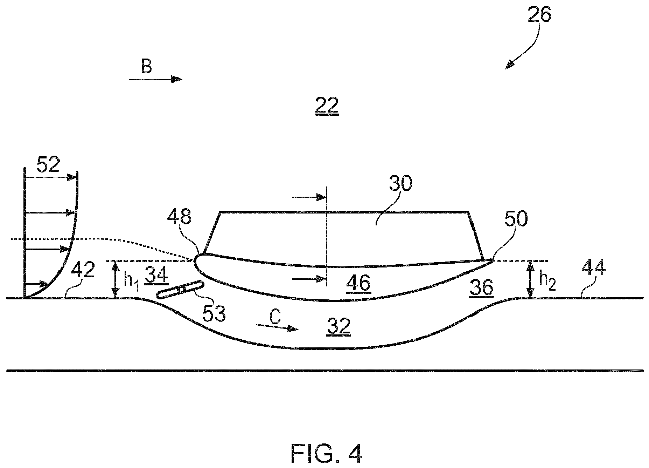

The inlet 34 and/or the outlet 36 can be shaped and/or sized so as to produce the desired flow rate and/or volume through diversion passageway 32. Further, as shown in Figure 4, the heat sink 26 may be provided with a valve 53, such as a throttle valve, for varying flow rate through the diversion passageway 32. The valve could be provided at the inlet 34 and/or the outlet 36 or at a position within the passageway 32. In other arrangements the shape and/or size and/or orientation of the inlet 36 and/or outlet 38 could be variable in order to achieve the desired flow rate and/or volume. The inlet 34 or outlet 36 could be provided with a ramp or moveable plate used to vary the flow through the diversion passageway 32. The ramp may be able to be angled and the movable plate may be able to be moved from a partially closed to a more open position to increase air intake into the diversion passageway 32.

The geometry of the heat sink 26 may be chosen to provide the optimum balance between cooling efficiency and pressure loss. During take-off when the temperature of the gas turbine engine 10 is particularly high, the heat sink 26 may be set in order to maximise the flow rate through the diversion passageway 32 so as to maximise the flow rate through the fins 30, thereby increasing the rate of heat transfer. At cruising altitude when the temperature of the gas turbine engine 10 is likely to be lower and peak cooler efficiency is not required, the heat sink 26 could be set so that the flow rate through the diversion passageway 32 is less (or zero), thereby reducing parasitic pressure losses.

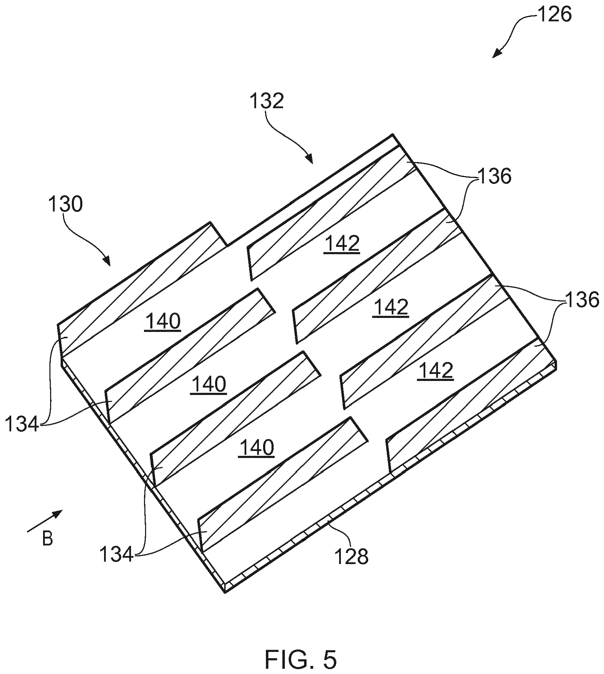

**Figure 5** shows a second arrangement of a passive heat sink 126 which can be used with the gas turbine engine described above with reference to Figure 1. The heat sink 126 generally comprises a thermally conductive base member 128 having a longitudinal axis, a first array of thermally conductive fins 130 and a second array of thermally conductive fins 132. The first array of fins 130 comprises a plurality of elongate first fins 134 that extend from the base member 128. The first fins 134 are arranged side-by-side and are parallel to one another and the longitudinal axis of the base member 128. The first fins 134 are spaced to define first fluid channels 140 between adjacent first fins 134. The second array of fins 132 comprises a plurality of elongate second fins 136 that extend from the base member 128. The second fins 136 are arranged side-by-side and are parallel to one another and the longitudinal axis of the base member 128. The second fins 136 are spaced to define second fluid channels 142 between adjacent second fins 136. In this arrangement, the lateral spacing between the first fins 134 and the lateral spacing between the second fins 136 is uniform. In other words, the width of the fluid channels 140, 142 is constant.

The second array of fins 132 is laterally offset from the first array of fins 134 (i.e. they are offset in a direction perpendicular to the longitudinal axis). The second array of fins 132 is laterally offset by a distance that is half the width of the fluid channels 140, 142. This means that each second fin 136 is aligned within a flow channel 140 defined by a pair of first fins 134. In this arrangement, the longitudinal axis of each second fin 136 is aligned centrally between adjacent first fins 132. In the arrangement shown, the downstream ends of the first fins 134 are substantially longitudinally aligned with the upstream ends of the second fins 136. However, it should be appreciated that there may be a gap between the first fin array 130 and the second fin array 132. In other arrangements, the first and second fin arrays 130, 132 may overlap in the longitudinal direction so that the ends of the second fins 136 are disposed within the flow channels 140 formed by the first fins 134, with the ends of the first fins 134 similarly being located within the flow channels 142 formed by the second fins 136. In the arrangement shown, the heat sink 126 is disposed within an open passageway. However, in other arrangements the heat sink 126 may be disposed within a ducted passageway.

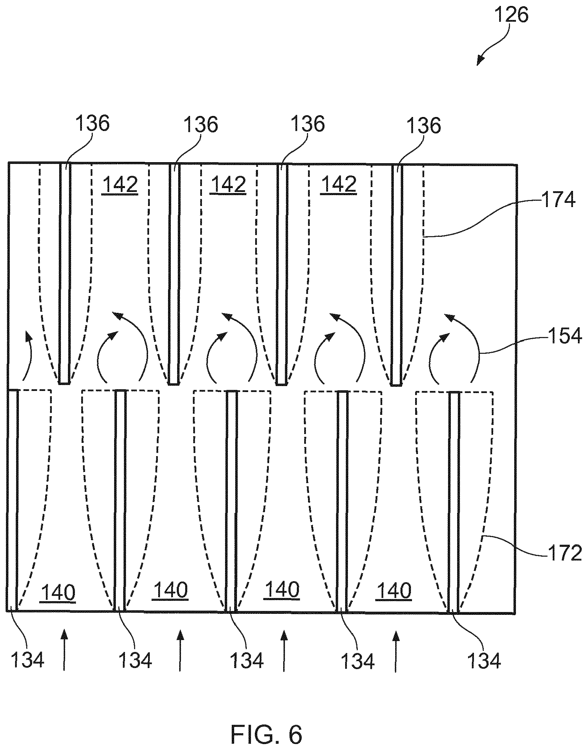

In use and as shown in **Figure 6****,** the flow of air B within the bypass duct 22 flows in a direction parallel to the longitudinal axis of the heat sink 126. The cooler air flow B flows through the first fin array 130 and the second fin array 132, transferring heat away from the heat sink 126 and hence the fan casing 24. In particular, the air flow B flows through the first fluid channels 140 of the first fin array 130 and then flows through the second fluid channels 142 of the second fin array 132. As shown in Figure 6, a boundary layer 172 forms on surfaces of the first fins 134, and this boundary layer thickens in a downstream direction. As explained above, this causes the flow velocity of the air in the region of the fins 132 to reduce, thereby reducing the efficiency of heat transfer away from the fins 132. However, in this arrangement, since the second fin array 132 is laterally offset from the first fin array 130, when the air flow reaches the end of the first fin array 132, it flows into the second fluid channels 142 of the second fin array 132. As the air flows into the second fluid channels 142 a new boundary layer 174 forms on the surfaces of the second fins 136. The boundary layer is, in effect, "restarted" and therefore a reduced-thickness boundary 174 layer is formed on the upstream ends of the second fins 136. This helps to increase the air flow velocity across the surfaces of the second fins 136, thereby helping to maintain effective heat transfer away from the fins 136.

Further, the downstream ends of the first fins 134 generate turbulent flow 154 within the second fluid channels 142. This turbulent flow 154 disturbs/mixes the boundary layers 174 formed on the surfaces of the second fins 136. This mixing of the boundary layer 174 reduces its thickness, thereby further improving the ability of the heat sink 126 to dissipate heat. Due to the effects of the turbulence, the thickness of the boundary layers 174 associated with the second fins 136 increases at a lesser rate than the thickness of the boundary layers 172 associated with the first fins 132.

Although only two fin arrays 130, 132 have been shown, the heat sink 126 may comprise three or more fin arrays. For example, there could be a first fin array followed by a second fin array followed by another first fin array. In such an arrangement the two first fin arrays could be laterally aligned, with the second fin array being laterally offset. The additional one or more arrays of fins may be configured in a similar manner as described above with respect to their immediately upstream array of fins.

It has been described that a single second fin 136 is aligned with each fluid channel 140, however, in other arrangements multiple second fins could be aligned within a flow channel 140. In other arrangements the spacing between the fins may be nonuniform. For example, the spacing between the first fins 134 could be twice the spacing between the second fins 136. The length of the fin arrays may be different in order to maximise efficiency. For example, the second fin array may be longer than the first fin array.

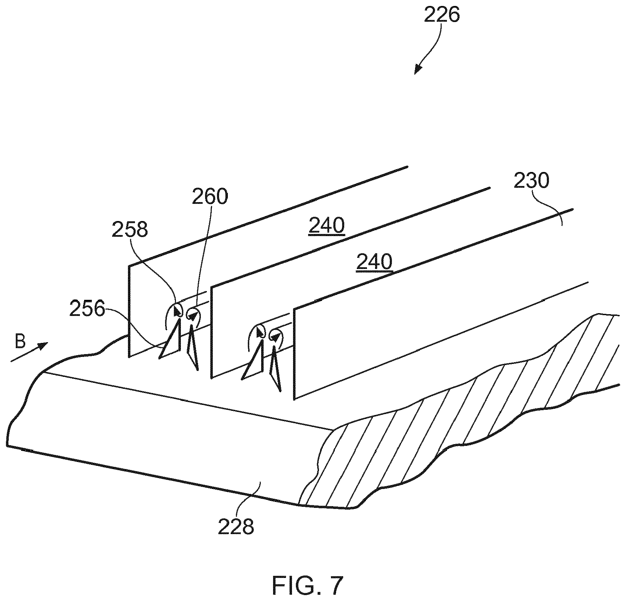

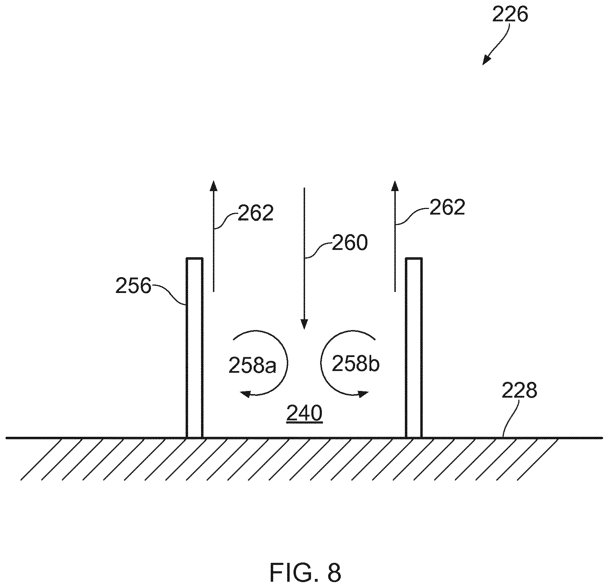

**Figures 7** **and** **8** show a passive heat sink 226 according to a further arrangement. The heat sink 226 generally comprises a thermally conductive base 228 and a plurality of thermally conductive elongate fins 230 that extend from the base member 228. The fins 230 are arranged side-by-side and are parallel to one another and the longitudinal axis of the base member 228. The fins 230 are spaced to define fluid channels 240 therebetween. Each fluid channel 240 is provided with a vortex generating feature that is positioned towards the upstream inlet region of the channel 240. The vortex generating feature is configured so that in use it promotes the generation of at least one vortex within the flow channel 240. The vortex generating feature is arranged to generate a vortex that has a vortex axis that longitudinally extends within the flow channel 240 and which is parallel to the longitudinal axis of the heat sink 226.

In this arrangement, the vortex generating feature comprises a pair projections in the form of vanes 256 that extend from the base 228 of the heat sink 226. The vanes 256 are symmetric about a plane that is parallel to the fins 230, and are substantially triangular in shape. In the arrangement shown, the vanes 256 are angled towards one another in a downstream direction.

In use, the air flow B within the bypass duct 22 flows through the heat sink 226. The air flow B approaches the pair of vanes 256, and the shape of the vanes 256 promotes the generation of a pair of contra-rotating vortices 258, 260. The vanes 256 therefore cause vortices to be formed within the flow channels 240, with the axes of the vortices being parallel to the longitudinal axis of the heat sink 226. The vortices 258, 260 rotate in opposite directions and therefore act as a "geared pair" of vortices that help to sustain each other along at least part of the length of the fluid channel 240.

In a typical fin-type heat sink, air flowing within the channels formed by adjacent fins heats up and expands as it flows downstream. This may lead to a reduction in the density of air in the vicinity of a downstream region of the heat sink. This can lead to an associated reduction in the rate of heat transfer. However, in this arrangement, the contra-rotating vortices 258, 260 help to stabilise the air flow and prevent the air from flowing/expanding away from the base 228 and fins 230. In other words, the vortices 258, 260 help to contain the fluid flowing within the flow channels, thereby improving the rate of heat transfer. Further, the vortices 258, 260 cause the air within the fluid channels 240 to move radially outwards, away from the centre of the fluid channels 240 and towards the fins 230 and base 228. Additionally, the vortices 258, 260 help to mix the boundary layer formed at the heat sink surfaces. As explained above, mixing the boundary layer reduces its thickness, leading to an improvement in the rate of heat transfer. Furthermore, the vortices 258, 260 cause a small amount of cool air 260 to be entrained in them, and small amount of hot air 262 to be expelled from them. Accordingly, the temperature of the fluid in the fluid channel 240 is maintained at a relatively low temperature, thereby further improving the rate of heat dissipation from the heat sink 226.

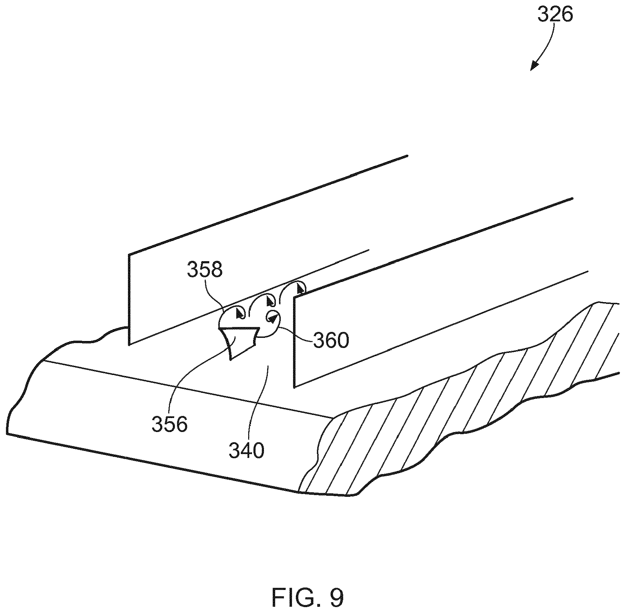

**Figure 9** shows a heat sink 326 according to a further arrangement. The heat sink 326 of Figure 9 functions in a similar manner to the heat sink 226 of the arrangement of Figures 7 and 8. However, in this arrangement the vortex generating feature comprises a single projection in the form of a vane 356 which is arranged to generate a pair of contra-rotating vortices 358, 360 in the fluid channel 340.

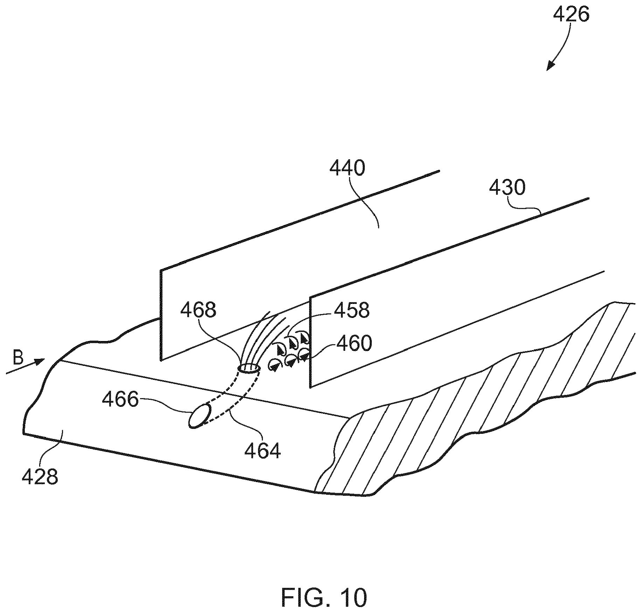

**Figure 10** shows yet a further heat sink 426. The heat sink 426 of functions in a similar manner to the heat sinks 226, 326 of the arrangements of Figures 7-9. However, in this arrangement the vortex generating feature comprises the nozzle 468 of a fluid jet that is shaped or configured to generate a pair of contra-rotating vortices 458, 460. The contra-rotating vortices 458a, 458b may be horseshoe vortices.

The fluid jet comprises an inlet 466 formed in the base 428 and arranged to receive an air flow, and a passageway 464 that extends to the nozzle outlet 468 that is disposed within the fluid channel 440. In use, the inlet 466 receives an air flow and the nozzle 468 injects this into the fluid channel 440 so as to generate a pair of vortices 458, 460. The outlet 468 may alternately be disposed upstream of the fluid channel 440. In other arrangements, the nozzle outlet 468 may comprise vortex-generating vanes for generating vortices.

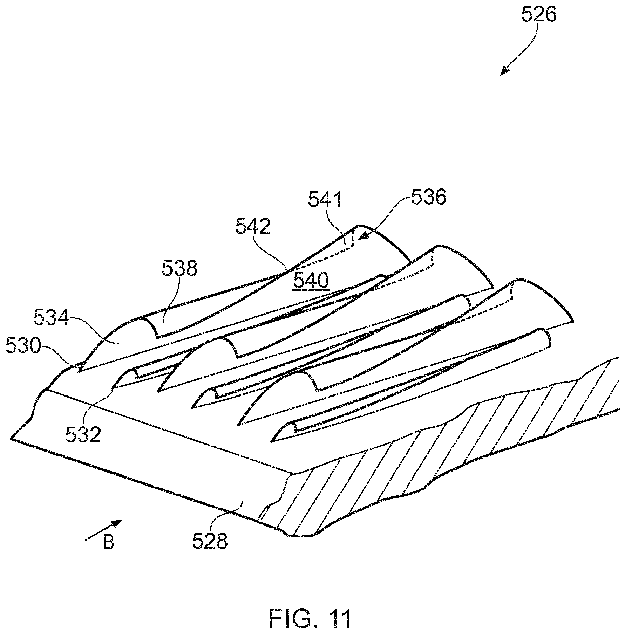

**Figure 11** shows a passive heat sink 526 according to a further arrangement. The heat sink 526 generally comprises a thermally conductive base 528 and a plurality of thermally conductive elongate fins 530, 532 that extend from the base 528. The fins 530, 532 are parallel to one another and the longitudinal axis of the heat sink 526. As in the other arrangements, the fins 530, 532 are arranged side-by-side and are spaced apart to define fluid channels 540. In this arrangement, the fins 530, 532 are arranged in pairs of a first elongate fin 530 and a second smaller elongate fin 532. However, the general shape of the first and second fins 530, 532 is similar.

Each fin 530, 532 has a planar lower portion 534 that extends from the base member 528. Each fin 530, 532 also comprises an upper edge region 536 that is twisted along its length so that it is out the plane of the planar portion 534. The twisted upper edge 536 is helicoidal in shape and has a pitch that is twice the length of the fin 530, 532. The twisted upper edge 536 has a first twist portion 538 twisted to a first side of the longitudinal axis of the fin 532, 534, and a second twist portion 541 twisted to the opposite side of the longitudinal axis of the fin 532, 534. The twisted upper edge 536 therefore has a point of inflexion 542 at the mid-point of the fin 530, 534.

In use, the air flow B within the bypass duct 22 flows through the heat sink 526. The helical twisted upper edge 536 of the fins 530, 532 promotes the generation of a vortex within the fluid channel 540. As in the arrangements described above, the vortex has a vortex axis that is longitudinally extending within the fluid channel 540 and which is substantially parallel to the planar portions 534 of the fins. The generation of longitudinally extending vortices within the flow channels 540 provide similar benefits to the vortexes generated by the arrangements shown in Figures 7-10. Further, the twisted upper edges 536 of the fins 530, 532 of the arrangement of Figure 11 also help to retain air within the fluid channels 540. Furthermore, the vortexes generated cause the residence time of the air flow within the flow channels to be increased when compared to conventional arrangements (i.e. air spends a longer time in the fluid channels due to the vortex path it is encouraged to flow). This increases the efficiency of the heat sink 526.

The heat sinks 26, 126, 226, 326, 426, 526 provide a number of benefits when compared to conventional fin-based heat sinks. Specifically, for a given heat sink size and/or surface area, the heat transfer rate and thus heat transfer efficiency is increased. This allows smaller heat sinks to be used, which represents a space and weight saving. Since smaller heat sinks are used, loss of area for acoustic noise attenuation purposes is minimised. For example, regions not covered in the heat sink may be provided with an acoustic liner. Further, since the heat sinks are passive, it is not necessary to provide dedicated ducting for a supplying a cooling fluid. In certain arrangements the passive heat sinks comprise no moving parts, and thus offer a low-cost alternative to more complex cooling systems. The heat sinks are also relatively compact, which allows them to be installed in locations where there is little space. Additionally, the heat sinks described above result in less pressure loss than equivalent matrix heat exchangers. Further, the heat sinks allow for optimum installation for core power module concepts for future large engines, and remove the need for fan case mounted services.

It should be appreciated that the features of one arrangement could be combined with those of other arrangements. For example, a heat sink having a diversion passageway could be provided with elongate fins having a twisted upper edge, and/or plural fin arrays could be provided that are laterally offset and/or a vortex generating feature could be located in each fluid channel.

It has been described that the heat sinks can be attached to the inner surface of the fan casing 24 of a gas turbine engine so that they are exposed to the air flow B through the bypass duct 22. However, it should be appreciated that the heat sinks could be installed in any suitable location in order to cool an engine component, provided the heat sink is exposed to a fluid flow. For example, the heat sinks could be located on an exterior surface of a nacelle 21 so that they are exposed to an air flow as the aeroplane is flying.

Although, the heat sinks have been described with reference to gas turbine engines, the heat sinks could be used in any suitable application. For example, they could be used in marine, power generation or electrical applications. Although the heat transfer medium has been described as being air, the heat transfer medium may be any suitable medium. For example, it could be fuel or oil.

## Claims

1. A heat sink (26) for location in a fluid flow, comprising:
a heat sink base (28);
a plurality of heat dissipating elements (30) extending from the surface of the heat sink base and defining a main flow path which passes through the plurality of heat dissipating elements; and
a diversion passageway (32) having an inlet (34) upstream of at least some of the heat dissipating elements and defining a diversion flow path;
wherein in use, a fraction of the fluid flow approaching the plurality of heat dissipating elements is diverted away from heat dissipating elements by entering the inlet and flowing through the diversion passageway.

2. A heat sink according to claim 1, wherein the outlet is downstream of at least some of the heat dissipating elements.

3. A heat sink according to claim 1 or claim 2, further comprising a valve (53) for regulating the fluid flow through the diversion passageway.

4. A heat sink (126) for location in a fluid flow, comprising:
a first fin array (130) comprising a plurality of first elongate fins (134) arranged side-by-side and spaced apart so as to define first flow channels (140); and
a second fin array (132) located downstream of the first fin array and comprising a plurality of second elongate fins (136) arranged side-by-side and spaced apart so as to define second flow channels (142);
wherein the first and second fins are substantially parallel to one another, and wherein the first and second fin arrays are laterally offset from one another such that the second fins are aligned within the flow channels defined by the first fins.

5. A heat sink according to claim 4, wherein the second fins are aligned centrally within the first flow channels.

6. A heat sink according to claim 4 or claim 5, wherein the downstream ends of at least some of the fins are shaped to generate turbulent flow.

7. A heat sink according to any of claims 4 to 6, wherein there is a plurality of first fin arrays and/or a plurality of second fin arrays.

8. A heat sink (226, 426) for location in a fluid flow, comprising:
a heat sink base (228 428); and
a plurality of heat dissipating elongate fins (230, 430) arranged side-by-side and spaced apart so as to define a plurality of flow channels (240, 440);
wherein one of more of the flow channels is provided with a vortex-generating feature towards an upstream end which is arranged such that in use it promotes the generation of a vortex within the respective flow channel, the vortex having a vortex axis that longitudinally extends within the respective flow channel.

9. A heat sink according to claim 8, wherein the or each vortex-generating feature comprises a shaped projection extending from the heat sink base.

10. A heat sink according to claim 8 or 9, wherein the or each vortex-generating feature comprises a pair of shaped projections (256) extending from the heat sink base and located side-by-side.

11. A heat sink according to claim 8 or claim 9, wherein the or each vortex-generating feature comprises a fluid jet nozzle (468).

12. A heat sink according to claim 10, wherein the or each vortex-generating feature is arranged to generate a pair of contra-rotating vortices (258, 260).

13. A heat sink (526) for location in a fluid flow, comprising:
a heat sink base (528); and
a plurality of heat dissipating elongate fins (530) arranged side-by-side and spaced apart so as to define a plurality of flow channels (540);
wherein at least some of the fins have a twisted upper edge region (536) that is twisted along its length such that in use it promotes the generation of a vortex within at least one flow channel, the vortex having a vortex axis that longitudinally extends within the respective flow channel.

14. A heat sink according to claim 13, wherein the twisted upper edge region has a first twist portion (538) and a second twist portion (541), the first and second twist portions being twisted to opposite sides of the general longitudinal axis of the fin.

15. A heat sink according to claim 13 or claim 14, wherein the elongate fins are arranged in pairs, each pair comprising a first elongate fin (530) and a second elongate fin (532) smaller than the first elongate fin, and wherein the first elongate fin and the second elongate fin each have a twisted upper edge region.

16. A gas turbine engine (10) comprising a heat sink in accordance with any preceding claim, wherein the heat sink is disposed in a fluid flow path and thermally coupled to a component to be cooled.
